# EUROPEAN PATENT SPECIFICATION

(11) **EP 3 979 061 B1**
(45) Date of publication and mention of the grant of the patent: **09.09.2026**
(21) Application number: 20843356.5
(22) Date of filing: 21.07.2020
(51) Int. Cl.: G06Q 20/32, G06F 3/04883, G06F 3/04817, H04M 1/72457, H04M 1/72454, G06F 9/445, H04M 1/72451

(54) **QUICK APPLICATION STARTING METHOD AND RELATED DEVICE**
VERFAHREN ZUM SCHNELLEN STARTEN VON ANWENDUNGEN UND ZUGEHÖRIGE VORRICHTUNG
PROCÉDÉ DE DÉMARRAGE D'APPLICATION RAPIDE ET DISPOSITIF ASSOCIÉ

(30) Priority: 25.07.2019 CN 201910677567
(43) Date of publication of application: 06.04.2022
(73) Proprietor: HUAWEI TECHNOLOGIES CO., LTD., Shenzhen, Guangdong 518129 (CN)
(72) Inventor: HUANG, Xuanlong, Shenzhen, Guangdong 518129 (CN)
(74) Representative: MERH-IP Matias Erny Reichl Hoffmann Patentanwälte PartG mbB
(86) International application number: PCT/CN2020/103229
(87) International publication number: WO 2021/013145

(56) References cited:
- WO-A1-2013/003994
- WO-A1-2019/073813
- CN-A- 103 309 687
- CN-A- 105 282 312
- CN-A- 107 085 488
- CN-A- 107 132 967
- CN-A- 107 220 826
- CN-A- 109 889 630
- CN-A- 110 489 048
- US-A1- 2010 107 194
- US-A1- 2016 161 922
- US-A1- 2016 357 384
- US-A1- 2017 269 792
- US-A1- 2019 050 045
- US-A1- 2022 057 866

## Description

This application claims priority to Chinese Patent Application No. 201910677567.5, filed with the China National Intellectual Property Administration on July 25, 2019, and entitled "APPLICATION QUICK START METHOD AND RELATED APPARATUS".

### TECHNICAL FIELD

This application relates to the field of terminal technologies, and in particular, to an application quick start method and a related apparatus.

### BACKGROUND

Currently, there are more and more applications in the market, and application functions are increasingly complex. An operation path corresponding to an application function is also relatively complex. During operation of an application, a complex operation is required to enter a desired function/interface, and user experience is poor. For example, if a user wants to use a corresponding function of an application, a general operation path is to tap an application icon, select a menu, and then select a function on the menu to enter a corresponding function/interface.

Therefore, how to simplify user operation steps becomes a problem that needs to be resolved. Document CN 109 889 630 A generally discloses an electronic device that displays, on a first display of a foldable display, a user interface provided by a reading application, a user may flip over the electronic device, to trigger the electronic device to display, on a second display of the foldable display, a user interface provided by the reading application. In addition, the second display may display the user interface in a form suitable for reading by the user. The user can trigger, in an interaction manner of flipping over the electronic device, the electronic device to display, on the second display with reference to a currently running application or a current location, content that the user expects to view.
Document US 2019/050045 A1 generally discloses a method and system for displaying content on an electronic device are provided. The method includes receiving content to be displayed on a low power display (LPD). Further, the method includes identifying at least one characteristic of the content to be displayed on a low power display (LPD) of the electronic device. Based on the at least one characteristic of the content, the method includes determining compatibility of at least one portion of the content with the LPD. Further, based on the results of the compatibility check, the method includes transforming and displaying the at least one portion of the content on the LPD based on whether the at least one portion of the content is compatible with the LPD. Further, the method includes displaying the at least one portion of the content on the LPD with enabled low power touch (LPT).

### SUMMARY

The present invention is defined by the appended independent claims. Embodiments of this application provide an application quick start method and a related apparatus. The embodiments of this application help to quickly start an application, to simplify user operations, and improve application convenience. In particular, embodiments of the present application are defined by the independent claims. Additional features of embodiments of the invention are presented in the dependent claims. In the following, parts of the description and drawings referring to former embodiments which do not necessarily comprise all features to implement embodiments of the claimed invention are not represented as embodiments of the invention but as examples useful for understanding the embodiments of the invention. Embodiments of the present application (or the present disclosure) provide an application quick start method, an electronic device, a computer storage medium, and a computer program product.

According to a first aspect, the embodiments of this application provide an application quick start method, including:
detecting a swipe gesture of a user in real time, and obtaining user scenario information if the swipe gesture of the user is a shortcut operation gesture, and a start location of the swipe gesture is in a display area of an icon of a target application, where the user scenario information includes a current location of the user; and starting the target application, and displaying a payment interface of the target application if the current location of the user is a preset location, where a payment barcode, a payment QR code, or a payment digital code is displayed in the payment interface.

Compared with the conventional technology, in the foregoing solution, the user can enter the payment interface by performing only one tap operation. This greatly simplifies user operations, and improves an application start speed and convenience.

In a feasible embodiment, the user scenario information further includes current time, and the starting the target application, and displaying a payment interface of the target application if the current location of the user is a preset location includes:
if the current location of the user is the preset location and the current time is within a preset time period, starting the target application, and displaying the payment interface of the target application. A current scenario of the user can be accurately determined by introducing the current location of the user.

In a feasible embodiment, the preset location includes a bus station, a subway station, or a ferry terminal.

In a feasible embodiment, the preset time period is determined based on a usage habit parameter of the user, and the usage habit parameter includes on-duty and off-duty time points of the user or a time point at which the user daily uses a ride payment function of the target software.

According to a second aspect, the embodiments of this application provide an application quick start method, including:
detecting a swipe gesture of a user in real time, and obtaining user scenario information if the swipe gesture of the user is a shortcut operation gesture, and a start location of the swipe gesture is in a display area of an icon of a target application, where the user scenario information includes current time; if the current time is within a preset time period, obtaining a current location and a destination of the user; and starting the target application, and displaying a navigation interface of the target application, where a roadmap from the current location of the user to the destination is displayed in the navigation interface.

In the conventional technology, if a user needs to use a navigation function of a navigation application, the user first needs to tap an icon of the navigation application to start the navigation application, enter a destination address and a departure address, and then tap a "navigation" function button to display a navigation interface and perform navigation. It can be learned that, in the conventional technology, the user needs to perform at least three operations to use the navigation function. However, according to the method in the embodiments, the user needs to perform only one operation to use the navigation function, and this greatly simplifies user operations, and improves an application start speed and convenience compared with the conventional technology.

In a feasible embodiment, the preset time period is determined based on a usage habit parameter of the user, and the usage habit parameter includes on-duty and off-duty time points of the user or a time point at which the user daily uses a navigation function of the target software.

The destination is determined based on a daily activity track and activity time of the user.

According to a third aspect, the embodiments of this application provide an application quick start method, including:
detecting a swipe gesture of a user in real time, and obtaining user scenario information if the swipe gesture of the user is a shortcut operation gesture, and a start location of the swipe gesture is in a display area of an icon of a target application, where the user scenario information includes current time; and if the current time is within a preset time period, starting the target application, and displaying a play interface, where content of a program A is played in the play interface, and the preset time period is a broadcast time period of the program A.

In the conventional technology, regardless of a sports event, a movie, or a TV series that a user wants to watch, the user first needs to start a corresponding application, and taps a corresponding program in a main interface to play the corresponding program, or searches for a corresponding program in a main interface and then taps to play the corresponding program. Therefore, in the conventional technology, the user needs to perform at least two operations to watch a program. However, in the solutions of the embodiments, the user needs to perform only one operation, and this greatly simplifies user operations, and improves an application start speed and convenience compared with the conventional technology.

In a feasible embodiment, the program A is obtained from a calendar schedule of a terminal device at current time, or
obtained by collecting statistics on a program watched by the user in recent preset duration, or
obtained from the Internet based on a broadcast time of the program A.

In a feasible embodiment, the program A is a sports event, a TV series, a movie, or a variety show.

According to a fourth aspect, the embodiments of this application provide an electronic device, including a touchscreen, a memory, one or more processors, a plurality of applications, and one or more programs, where the one or more programs are stored in the memory, and when the one or more processors execute the one or more programs, the electronic device is enabled to implement some or all of the method according to the first aspect, the second aspect, or the third aspect.

According to a fifth aspect, the embodiments of this application provide a computer storage medium, including computer instructions, where when the computer instructions are run on an electronic device, the electronic device is enabled to perform some or all of the method according to the first aspect, the second aspect, or the third aspect.

According to a sixth aspect, the embodiments of this application provide a computer program product, where when the computer program product runs on a computer, the computer is enabled to perform some or all of the method according to the first aspect, the second aspect, or the third aspect.

In the embodiments of this application, the user can enable, through scenario intelligent identification, a function corresponding to a scenario in a target application by performing only one operation. This greatly simplifies user operations, and improves an application start speed and convenience.

### BRIEF DESCRIPTION OF DRAWINGS

FIG. 1 is a schematic diagram of a structure of an electronic device according to an embodiment of this application;
FIG. 2 is a schematic diagram of a software architecture according to an embodiment of this application;
FIG. 3a to FIG. 3d are schematic diagrams of a group of interfaces in the conventional technology according to an embodiment of this application;
FIG. 4a and FIG. 4b are schematic diagrams of quickly starting a payment interface according to an embodiment of this application;
FIG. 5 is a schematic diagram of a structure of a terminal device according to an embodiment of this application; and
FIG. 6 is a specific schematic flowchart of implementing quick navigation according to an embodiment of this application.

### DESCRIPTION OF EMBODIMENTS

The following clearly describes technical solutions in embodiments of this application in detail with reference to accompanying drawings.

The terms "first" and "second" mentioned below are merely intended for description, and shall not be understood as an indication or implication of relative importance or implicit indication of a quantity of indicated technical features. Therefore, a feature limited by "first" or "second" may explicitly or implicitly include one or more features. In the descriptions of the embodiments of this application, unless otherwise specified, "a plurality of" means two or more.

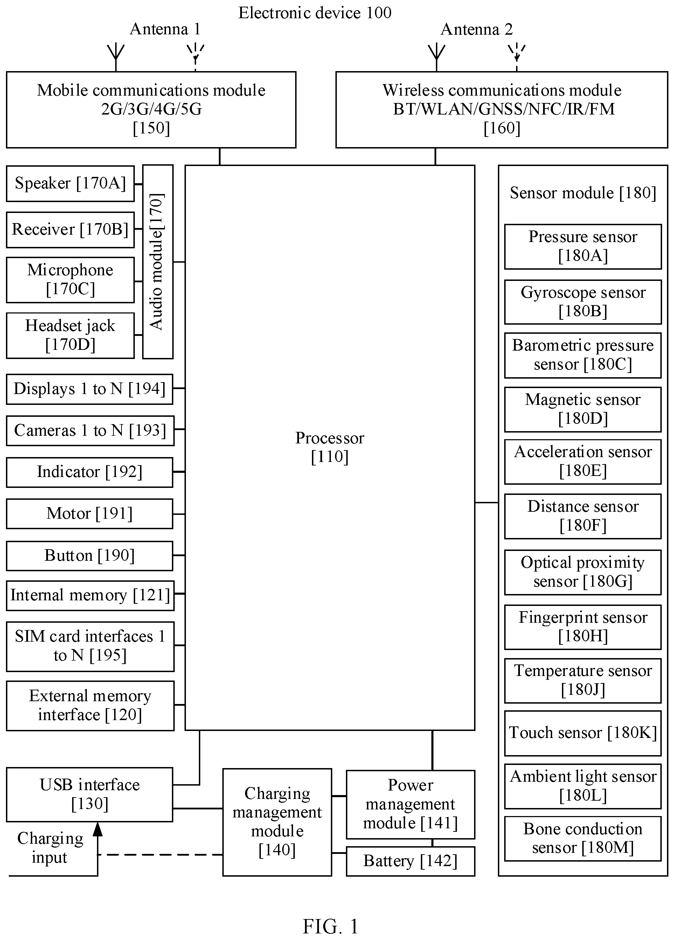

FIG. 1 is a schematic diagram of a structure of an electronic device 100.

The following specifically describes this embodiment by using the electronic device 100 as an example. It should be understood that the electronic device 100 may have more or fewer components than those shown in figure, or may combine two or more components, or may have different component configurations. Various components shown in the figure may be implemented in hardware that includes one or more signal processors and/or application-specific integrated circuits, software, or a combination of hardware and software.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that the structure shown in this embodiment of the present invention does not constitute a specific limitation on the electronic device 100. In other embodiments of this application, the electronic device 100 may include more or fewer components than those shown in the figure, combine some components, split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated in one or more processors.

The controller may be a nerve center and a command center of the electronic device 100. The controller may generate an operation control signal based on instruction operation code and a time sequence signal, to complete control of instruction reading and instruction execution.

A memory may further be disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access and reduces waiting time of the processor 110, so that system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It can be understood that an interface connection relationship between the modules shown in the embodiments of the present invention is merely an example for description, and does not constitute a limitation on a structure of the electronic device 100. In other embodiments of this application, the electronic device 100 may alternatively use an interface connection mode different from that in the foregoing embodiment, or use a combination of a plurality of interface connection modes.

The charging management module 140 is configured to receive a charging input from the charger. The charger may be a wireless charger or a wired charger.

The power management module 141 is configured to connect the battery 142 and the charging management module 140 to the processor 110. The power management module 141 receives an input of the battery 142 and/or the charging management module 140, and supplies power to the processor 110, the internal memory 121, an external memory, the display 194, the camera 193, the wireless communications module 160, and the like.

A wireless communication function of the electronic device 100 may be implemented through the antenna 1, the antenna 2, the mobile communications module 150, the wireless communications module 160, the modem processor, the baseband processor, and the like.

The electronic device 100 implements a display function by using the GPU, the display 194, the application processor, and the like. The GPU is a microprocessor for image processing, and is connected to the display 194 and the application processor. The GPU is configured to perform mathematical and geometric calculation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, quantum dot light emitting diodes (quantum dot light emitting diodes, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format such as an RGB format or a YUV format. In the embodiments of the present invention, the camera 193 includes a camera that captures an image required for facial recognition, for example, an infrared camera or another camera. The camera that captures an image required for facial recognition is generally located at the front of the electronic device, for example, above a touchscreen, or may be located at another location. This is not limited in the embodiments of the present invention. In some embodiments, the electronic device 100 may include another camera. The electronic device may further include a dot matrix transmitter (which is not shown in the figure), configured to emit light. The camera collects light reflected by a face to obtain a face image. The processor processes and analyzes the face image, and compares the face image with stored face image information for verification.

The digital signal processor is configured to process a digital signal, and may process another digital signal in addition to the digital image signal. For example, when the electronic device 100 selects a frequency, the digital signal processor is configured to perform Fourier transform on frequency energy and the like.

The video codec is configured to compress or decompress a digital video. The electronic device 100 may support one or more video codecs. Therefore, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, a transfer mode between human brain neurons, and may further continuously perform self-learning. The NPU can implement applications such as intelligent cognition of the electronic device 100, such as image recognition, facial recognition, speech recognition, and text understanding.

The external memory interface 120 may be configured to connect to an external storage card, for example, a micro SD card, to extend a storage capability of the electronic device 100. The external storage card communicates with the processor 110 through the external memory interface 120, to implement a data storage function. For example, files such as music and a video are stored in the external storage card.

The internal memory 121 may be configured to store computer executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system and an application required by at least one function (for example, a facial recognition function, a fingerprint recognition function, and a mobile payment function). The data storage area may store data (such as facial information template data and a fingerprint information template) created when the electronic device 100 is used, and the like. In addition, the internal memory 121 may include a high-speed random access memory, and may further include a nonvolatile memory, for example, at least one magnetic disk storage device, a flash memory device, or a universal flash storage (universal flash storage, UFS).

The electronic device 100 may implement audio functions, for example, music playing and recording, by using the audio module 170, the speaker 170A, the receiver 170B, the microphone 170C, the headset jack 170D, the application processor, and the like.

The audio module 170 is configured to convert digital audio information into an analog audio signal output, and is further configured to convert an analog audio input into a digital audio signal.

The speaker 170A, also referred to as a "horn", is configured to convert an audio electrical signal into a sound signal.

The receiver 170B, also referred to as an "earpiece", is configured to convert an audio electrical signal into a sound signal.

The microphone 170C, also referred to as a "mike" or a "mic", is configured to convert a sound signal into an electrical signal.

The headset jack 170D is configured to connect to a wired headset. The headset jack 170D may be the USB interface 130, or may be a 3.5 mm open mobile terminal platform (open mobile terminal platform, OMTP) standard interface or a Cellular Telecommunications Industry Association of the USA (Cellular Telecommunications Industry Association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, for example, a resistive pressure sensor, an inductive pressure sensor, and a capacitive pressure sensor.

The gyroscope sensor 180B may be configured to determine a motion posture of the electronic device 100. In some embodiments, an angular velocity of the electronic device 100 around three axes (namely, axes x, y, and z) may be determined by using the gyroscope sensor 180B.

The optical proximity sensor 180G may include, for example, a light-emitting diode (LED) and an optical detector such as a photodiode. The light-emitting diode may be an infrared light-emitting diode.

The ambient light sensor 180L is configured to sense ambient light brightness. The electronic device 100 may adaptively adjust brightness of the display 194 based on the sensed ambient light brightness. The ambient light sensor 180L may also be configured to automatically adjust a white balance during photographing.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like. The fingerprint sensor 180H may be disposed below the touchscreen. The electronic device 100 may receive a touch operation of the user in an area corresponding to the fingerprint sensor on the touchscreen, and collect fingerprint information of a finger of the user in response to the touch operation, to implement opening of a hidden album after fingerprint recognition succeeds, starting of a hidden application after fingerprint recognition succeeds, account logging after fingerprint recognition succeeds, payment completing after fingerprint recognition succeeds, and the like described in the embodiments of this application.

The temperature sensor 180J is configured to detect a temperature. In some embodiments, the electronic device 100 executes a temperature processing policy based on the temperature detected by the temperature sensor 180J.

The touch sensor 180K is also referred to as a "touch panel". The touch sensor 180K may be disposed in the display 194, and the touch sensor 180K and the display 194 form a touchscreen, which is also referred to as a "touch screen". The touch sensor 180K is configured to detect a touch operation performed on or near the touch sensor 180K. The touch sensor may transfer the detected touch operation to the application processor, to determine a type of a touch event. Visual output related to the touch operation may be provided on the display 194. In some other embodiments, the touch sensor 180K may alternatively be disposed on a surface of the electronic device 100 at a location different from a location of the display 194.

The button 190 includes a power button, a volume button, and the like. The button 190 may be a mechanical button, or may be a touch button. The electronic device 100 may receive a button input, and generate a button signal input related to a user setting and function control of the electronic device 100.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. In some embodiments, the electronic device 100 uses an eSIM, namely, an embedded SIM card. The eSIM card may be embedded into the electronic device 100, and cannot be separated from the electronic device 100.

A software system of the electronic device 100 may use a layered architecture, an event-driven architecture, a microkernel architecture, a micro service architecture, or a cloud architecture. In the embodiments of the present invention, an Android system of a layered architecture is used as an example to describe a software structure of the electronic device 100.

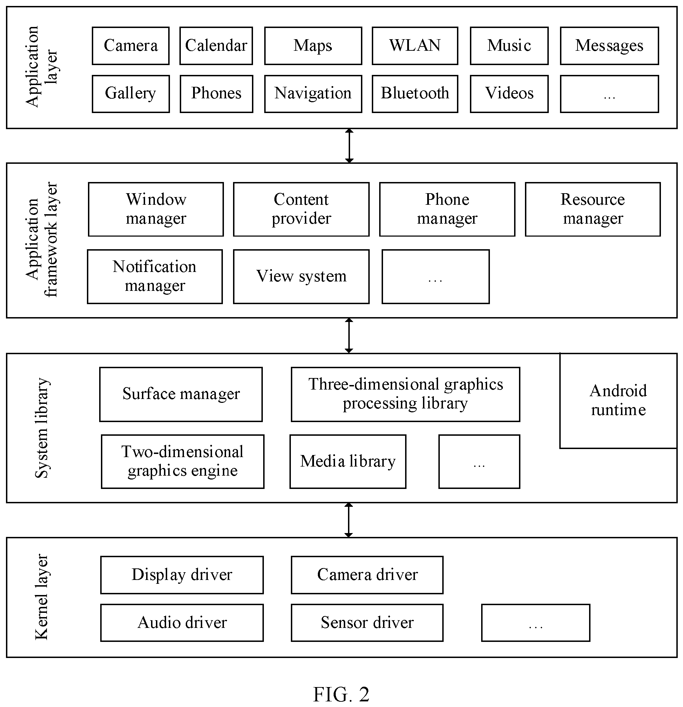

FIG. 2 is a block diagram of a software structure of the electronic device 100 according to an embodiment of the present invention.

In a hierarchical architecture, software is divided into several layers, and each layer has a clear role and task. The layers communicate with each other through a software interface. In some embodiments, the Android system is divided into four layers: an application layer, an application framework layer, an Android runtime (Android runtime), a system library, and a kernel layer from top to bottom.

The application layer may include a series of application packages.

As shown in FIG. 2, the application packages may include applications (or referred to as applications) such as Camera, Gallery, Calendar, Phone, Map, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to store and obtain data, and enable the data to be accessed by an application. The data may include a video, an image, audio, calls that are made and received, a browsing history and a bookmark, a phone book, and the like.

The view system includes visual controls, such as a control for displaying a text and a control for displaying an image. The view system may be configured to construct an application. A display interface may include one or more views. For example, a display interface including an SMS message notification icon may include a text display view and an image display view.

The phone manager is configured to provide a communication function of the electronic device 100, for example, management of a call status (including answering, declining, or the like).

The resource manager provides, for an application, various resources such as a localized character string, an icon, a picture, a layout file, and a video file.

The notification manager enables an application to display notification information in a status bar, and may be configured to convey a notification type message, where the displayed notification information may automatically disappear after a short pause and require no user interaction. For example, the notification manager is configured to provide notifications of download completing, a message prompt, and the like. The notification manager may alternatively be a notification that appears in a top status bar of the system in a form of a graph or a scroll bar text, for example, a notification of an application running on the background or a notification that appears on the screen in a form of a dialog interface. For example, text information is displayed in the status bar, an alert sound is played, the electronic device vibrates, or the indicator light blinks.

The Android runtime includes a kernel library and a virtual machine. The Android runtime is responsible for scheduling and management of the Android system.

The kernel library includes two parts: a function that needs to be invoked in Java language and a kernel library of Android.

The application layer and the application framework layer run on the virtual machine. The virtual machine executes Java files at the application layer and the application framework layer as binary files. The virtual machine is configured to perform functions such as object life cycle management, stack management, thread management, security and exception management, and garbage collection.

The system library may include a plurality of function modules, for example, a surface manager (surface manager), media libraries (Media Libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording of audio and videos in a plurality of commonly used formats, static image files, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

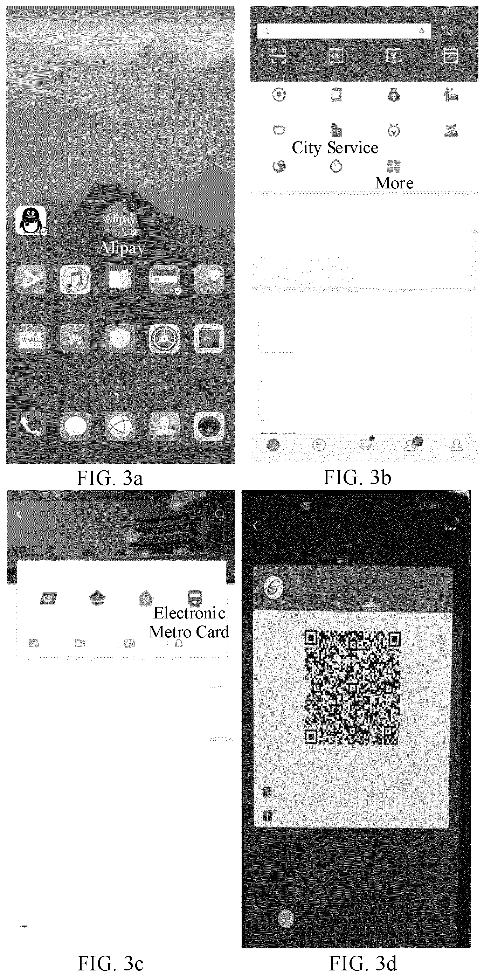

In the conventional technology, applications have more and more functions. If a user wants to use a function, the user needs to perform complex operations to enter a function interface. It is very inconvenient for users, especially for some middle-/old-aged users. For example, if the user needs to use an electronic metro card of Alipay to take the metro, as shown in FIG. 3a to FIG. 3d, the user needs to perform three tap operations. As shown in FIG. 3a, the user first taps an area occupied by an icon of Alipay to enter an interface shown in FIG. 3b, then taps "City Service" to enter an interface shown in FIG. 3c, and finally taps "Electronic Metro Card" to enter a payment interface shown in FIG. 3d, where a QR code is displayed in the payment interface. If an icon of "City Service" is not displayed in the interface shown in FIG. 3b, the user needs to additionally tap "More" in the interface shown in FIG. 3b, and then search for and tap "City Service" in the displayed interface to enter the interface shown in FIG. 3c. It can be learned from the conventional technology 1 shown in FIG. 3a to FIG. 3d that, when the user needs to use Alipay to take a ride, the user needs to perform at least three tap operations. In addition, Alipay has various functions, and an operation process of enabling a function is relatively complex. This is very inconvenient for users.

Application scenario 1: To resolve the foregoing problem, this application provides an application quick start method. Specifically, the method includes the following steps:
A terminal device detects a swipe gesture of the user in real time, and obtains user scenario information if the swipe gesture of the user is a shortcut operation gesture, and a start location of the swipe gesture is in a display area of an icon of a target application, where the user scenario information includes a current location of the user; and if the current location of the user is a preset location, the terminal device starts the target application, and displays a payment interface of the application, where a payment barcode, a payment QR code, a payment digital code, or other information that can be used for payment is displayed in the payment interface.

It should be noted herein that the swipe gesture of the user for the target application specifically means that the start location of the swipe gesture is in the display area of the icon of the target application.

Optionally, the target application may be Alipay, WeChat, or another application that can display the payment interface.

Optionally, the preset location is a subway station, a bus stop, a ferry terminal, or another place where a transportation vehicle can be taken.

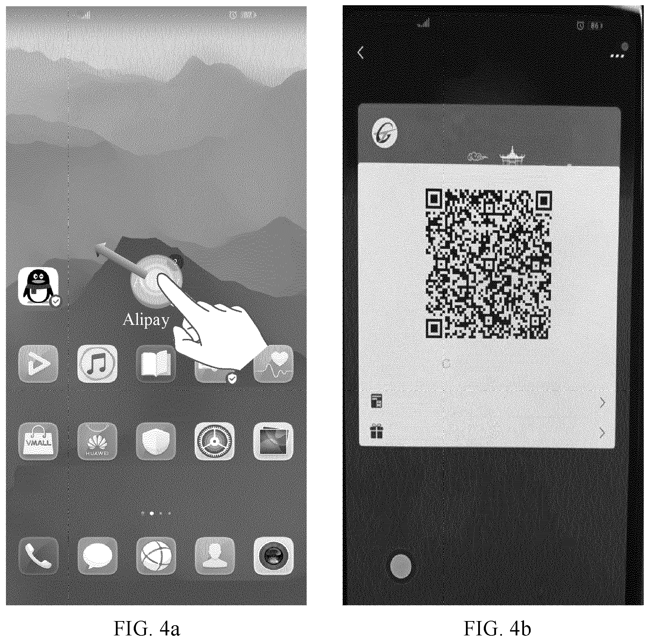

For example, the target application is Alipay, and the preset location is a subway station. As shown in FIG. 4a, when the user walks to the subway station, a swipe gesture is swiping to an upper left corner (that is, the swipe gesture is a shortcut operation gesture), and a start location of the swipe gesture is in a display area of an icon of Alipay. In this case, the terminal device detects that the swipe gesture is for Alipay, and the swipe gesture is a shortcut operation gesture. The terminal device obtains a current location of the user. If the current location of the user is a subway station, the user of the terminal device starts Alipay and displays a payment interface, where the payment interface is shown in FIG. 4b, and a payment QR code is displayed in the payment interface.

Compared with the conventional technology, in the foregoing solution, the user can enter the payment interface by performing only one tap operation. This greatly simplifies user operations, and improves an application start speed and convenience.

In an example, the user scenario information further includes current time. If the current location of the user is the preset location and the current time is within a preset time period, the terminal device starts the target application, and displays the payment interface of the target application.

The preset time period is determined based on a usage habit parameter of the user, and the usage habit parameter of the user includes on-duty and off-duty time points of the user, a time point at which the user daily uses a ride payment function of the target software, and the like.

For example, the target application is Alipay, the preset location is a subway station, the preset time period is 5:45 to 6:30, and the current time is 6:30. As shown in FIG. 4a, when the user walks to the subway station, a swipe gesture is swiping to an upper left corner, and a start location is in a display area of an icon of Alipay. In this case, the terminal device detects that the swipe gesture is for Alipay, and the swipe gesture is a shortcut operation gesture. The terminal device obtains current location information of the user and current time. If it is determined that a location indicated by the current location information is the subway station and the current time is within a preset time period, the terminal device starts Alipay and displays a payment interface, where the payment interface is shown in FIG. 4b, and a payment QR code is displayed in the payment interface.

In this embodiment, a use scenario of the user is determined based on the current location information and the current time. In this way, the use scenario of the user can be determined more accurately compared with determining based only on the current location information.

It should be noted herein that in the embodiments of this application, "a swipe gesture is swiping to an upper left corner (that is, the swipe gesture is a shortcut operation gesture)" does not limit a shortcut operation gesture to "swiping to an upper left corner", but is merely used as an example. The shortcut operation gesture may also be a specific gesture preset in a system, for example, "swiping to an upper right corner" or "swiping to a lower right corner". The shortcut operation gesture is not specifically limited in this application.

Similarly, in the embodiments of this application, "a swipe gesture is swiping to an upper left corner" does not limit a swipe gesture to "swiping to an upper left corner", but is merely used as an example. Certainly, the swipe gesture may be obtained by the user by randomly swiping on the touchscreen. This is not specifically limited in this application.

Application scenario 2: To resolve the foregoing problem, this embodiment of this application provides another application quick start method. Specifically, the method includes the following steps:
A terminal device detects a swipe gesture of the user in real time, and obtains user scenario information if the swipe gesture of the user is a shortcut operation gesture, and a start location of the swipe gesture is in a display area of an icon of a target application, where the user scenario information includes current time; and if the current time is within a preset time period, the terminal device obtains a current location and a destination of the user, starts the target application, and displays a navigation interface of the target application, where a roadmap from the current location of the user to the destination is displayed in the navigation interface.

For example, it is assumed that the target application is Amap, the shortcut operation gesture is swiping to an upper left corner, the current time is 17:45 on Monday, the preset time period is 17:30 to 19:30 on a workday, the current location of the user is a company address, and the destination is a home address. When it is detected that the swipe gesture of the user is swiping to an upper left corner, and a start location of the swipe gesture is located in a display area of an icon of Amap, the terminal device obtains the current time (namely, 17:45 on Monday), determines that the current time is within the preset time period (namely, 17:30 to 19:30 on a workday), then obtains the current location (namely, the company address) and the destination (namely, the home address) of the user, starts Amap, and displays a navigation interface of Amap, where a roadmap from the company to the home is displayed in the navigation interface.

It should be noted herein that the preset time period is determined based on a usage habit parameter of the user, and the usage habit parameter of the user includes on-duty and off-duty time points of the user, a time point at which the user daily uses a navigation function of the target software, and the like. The destination is determined based on a daily activity track and activity time of the user.

For example, 17:30 to 19:30 on a workday is obtained by the terminal device by collecting statistics on the on-duty and off-duty time points of the user. In other words, the user is probably off duty in the time period from 17:30 to 19:30 on a workday.

Alternatively, 17:30 to 19:30 on a workday is obtained by the terminal device by collecting statistics on the time point at which the user daily uses the navigation function of the target software. In other words, the user probably needs to use the navigation function of the target software in the time period from 17:30 to 19:30 on a workday.

The destination is determined based on the daily activity track and the activity time of the user. An example is used for description herein. For example, the terminal device determines that the user is in a swimming pool at 15:30 every Saturday through statistics, and determines, at 15:30 or before 15:30 (for example, 15:15) on Saturday, that the user is not in the swimming pool. In this case, a destination obtained by the terminal device is the swimming pool. For another example, the terminal device determines that the user is in a city library at 10:00 every Sunday through statistics, and determines, at 10:00 or before 10:00 (for example, 9:45) on Sunday, that the user is not in the city library. In this case, a destination of the user obtained by the terminal device is the city library.

In another example, for a user without a private car, the terminal device detects a swipe gesture of the user in real time. If the swipe gesture of the user is a shortcut operation gesture, and a start location of the swipe gesture is in a display area of an icon of a target application, the terminal device obtains user scenario information, where the user scenario information includes current time and current weather information. If the current time is within a preset time period, and the current weather information indicates that current weather is rain or snow, the terminal device obtains a current location and a destination of the user, starts the target application, and displays a ride-hailing interface of the target application; or starts a ride-hailing application (such as DiDi Chuxing, Cao Cao dedicated vehicle, and Hello Chuxing) associated with the target application, and displays the ride-hailing interface of the ride-hailing application, where information about fees from the current location of the user to the destination and information about whether a current ride-hailing order is accepted are displayed in the ride-hailing interface.

For example, Li Lei does not have a private car and goes to work by bus every workday. On a torrential workday, Li Lei uses a mobile phone and swipes from a display area of an icon of Amap to an upper left corner (that is, a swipe gesture). After detecting that the swipe gesture is a shortcut operation gesture, the mobile phone obtains current time (for example, 7:45) and current weather information (that is, rainstorm). When determining that the current time is within a preset time period (that is, determining that the current time is an on-duty time point of the user), the mobile phone obtains a current location and a destination of the user, starts Amap, generates a ride-hailing order, and displays a ride-hailing interface of Amap, where information about fees from the current location of the user to the destination and information about whether the ride-hailing order is accepted are displayed in the ride-hailing interface. After the ride-hailing order is accepted by a driver, the mobile phone enters a navigation interface from the ride-hailing interface, where a roadmap from the current location of the user to the destination and identity information of the driver and a vehicle are displayed in the navigation interface, and location information of the vehicle is displayed in the navigation interface in real time. Li Lei eventually takes the vehicle to the company.

In the conventional technology, if the user needs to use a navigation function of a navigation application, the user first needs to tap an icon of the navigation application to start the navigation application, enter a destination address and a departure address, and then tap a "navigation" function button to display a navigation interface and perform navigation. It can be learned that, in the conventional technology, the user needs to perform at least three operations to use the navigation function. However, according to the method in the embodiments, the user needs to perform only one operation to use the navigation function. This greatly simplifies user operations, and improves an application start speed and convenience compared with the conventional technology.

Application scenario 3: To resolve the foregoing problem, this embodiment of this application provides another application quick start method. Specifically, the method includes the following steps:

A terminal device detects a swipe gesture of the user in real time, and obtains user scenario information if the swipe gesture of the user is a shortcut operation gesture, and a start location of the swipe gesture is in a display area of an icon of an attendance application, where the user scenario information includes current time and a current location of the user; and if the current time is within an attendance time period, and the current location of the user is within an attendance range, the terminal device starts the attendance application, and performs attendance.

The attendance time period may be 7:30 to 9:00, and the attendance range is a range with a location of a user's company as the center and a preset value as the radius.

Optionally, the preset value may be 100, 200, 500, or another value.

Optionally, the attendance application may be Enterprise WeChat, DingTalk, or another application for attendance.

It should be noted herein that the current location of the user is obtained by a locating apparatus of the terminal device. The location of the user's company is obtained based on big data of an activity range of the user on workdays by using an intelligent assistant of the terminal device. For example, on workdays in the past week, the user stays in the location of the user's company for a long time. The intelligent assistant is not limited in this application, and may alternatively be another software or application that implements a function of the intelligent assistant.

For example, it is assumed that the attendance time period is 7:30 to 9:00, the attendance range is a range with the location of the user's company as the center and 400 as the radius, current time is 8:00, and a distance between a current location and the location of the user's company is 300. In this case, the terminal device detects a swipe gesture of the user, where the swipe gesture is a shortcut operation gesture, and the start location of the swipe gesture is in the display area of the icon of the attendance application. The terminal device obtains the current time (that is, 8:00) and the current location of the user. After determining that the current time 8:00 is within the attendance time period 7:30 to 9:00, and the current location of the user is within the attendance range, the terminal device starts the attendance application, and performs attendance.

In the conventional technology, if the user needs to use an attendance function of an attendance application, the user first needs to tap an icon of the attendance application to open a main interface of the attendance application, then tap a "workbench" function button in the main interface to enter an attendance interface, and finally tap an "attendance" function button to implement the attendance function. It can be learned that, in the conventional technology, the user needs to perform at least three operations to perform attendance by using the attendance application. However, according to the method in the embodiments, the user needs to perform only one operation to perform attendance. This greatly simplifies user operations, and improves an application start speed and convenience compared with the conventional technology.

Application scenario 4: To resolve the foregoing problem, this embodiment of this application provides another application quick start method. Specifically, the method includes the following steps:

A terminal device detects a swipe gesture of the user in real time, and obtains user scenario information if the swipe gesture of the user is a shortcut operation gesture, and a start location of the swipe gesture is in a display area of an icon of a target application, where the user scenario information includes current time; and if the current time is within a preset time period, the terminal device starts the target application, and displays a play interface, where content of a program A is played in the play interface, and the preset time period is a broadcast time period of the program A.

In an example, the program A is obtained from a calendar schedule of the terminal device at current time, or
obtained by collecting statistics on a program watched by the user in recent preset duration, or
obtained from the Internet based on a broadcast time of the program A.

In an example, the program A is a sports event, a TV series, a movie, or a variety show.

For example, it is assumed that the program A is a football match, the target application is CCTVbox, and the terminal device learns, through statistics by using an intelligent assistant, that a user watches football matches by using CCTVbox in a recent week. The terminal device detects a swipe gesture of the user in real time, and obtains user scenario information if the swipe gesture of the user is a shortcut operation gesture, and a start location of the swipe gesture is in a display area of an icon of CCTVbox, where the user scenario information includes current time. If the current time is within a preset time period, the terminal device starts CCTVbox, and displays a play interface, and a football match is played in the play interface, where the preset time period is a live broadcast time period of the football match. The live broadcast time period of the football match may be obtained by the terminal device from the Internet. For example, a live broadcast time period of a national football match is obtained from a CCTV sports channel website.

For another example, it is assumed that the program A is a football match, and the target application is CCTVbox. The user adds a schedule to a calendar, where content of the schedule includes a live broadcast time period of the football match. The terminal device detects a swipe gesture of the user in real time, and obtains user scenario information if the swipe gesture of the user is a shortcut operation gesture, and a start location of the swipe gesture is in a display area of an icon of CCTVbox, where the user scenario information includes current time. If the current time is within a preset time period, the terminal device starts CCTVbox, and displays a play interface, and a football match is played in the play interface, where the preset time period is a live broadcast time period of the football match that is obtained from the calendar schedule.

For another example, it is assumed that the program A is a movie M, the target application is iQIYI, and the user queried premiere time of the movie M on iQIYI by using the terminal device. The terminal device detects a swipe gesture of the user in real time, and obtains user scenario information if the swipe gesture of the user is a shortcut operation gesture, and a start location of the swipe gesture is in a display area of an icon of iQIYI, where the user scenario information includes current time. If the current time is within a preset time period, the terminal device starts iQIYI, and displays a play interface, and the movie M is played in the play interface, where the preset time period is obtained based on the premiere time and playing duration of the movie M on iQIYI.

For another example, it is assumed that program A is a TV series J, the target application is iQIYI, and the terminal device learns, through statistics by using an intelligent assistant, that the user has been watching the TV series J on iQIYI in the recent week. The terminal device detects a swipe gesture of the user in real time, and obtains user scenario information if the swipe gesture of the user is a shortcut operation gesture, and a start location of the swipe gesture is in a display area of an icon of iQIYI, where the user scenario information includes current time. If the current time is within a preset time period, the terminal device starts iQIYI, and displays a play interface, and the TV series J is played in the play interface, where the preset time period is obtained based on daily start time and playing duration of the TV series J on iQIYI.

In a feasible embodiment, obtaining manners of the program A have different priorities. When the program A can be obtained in a plurality of manners, an obtaining manner of the program A is determined as an obtaining manner with a highest priority. For example, there are three obtaining manners of the program A: Manner 1: The program A is obtained from the calendar schedule of the terminal device at current time. Manner 2: The program A is obtained by collecting statistics on programs watched by the user in recent preset duration. Manner 3: The program A is obtained from the Internet based on broadcast time of the program A. Manner 1 has the highest priority, Manner 2 has the medium priority, and Manner 3 has the lowest priority.

When a sports event is obtained from the calendar schedule of the terminal device at current time, it is determined, through statistics, that a program watched by the user in recent preset duration is a TV series, and the TV series and the sports event are played by using CCTVbox. The terminal device detects a swipe gesture of the user in real time, and obtains user scenario information if the swipe gesture of the user is a shortcut operation gesture, and a start location of the swipe gesture is in a display area of an icon of CCTVbox, where the user scenario information includes current time. If the current time is within a preset time period, the terminal device starts CCTVbox, and displays a play interface, and a football match is played in the play interface, where the preset time period is a live broadcast time period of the sports event.

In the conventional technology, regardless of a sports event, a movie, or a TV series that a user wants to watch, the user first needs to start a corresponding application, and taps a corresponding program in a main interface to play the corresponding program, or searches for a corresponding program in a main interface and then taps to play the corresponding program. Therefore, in the conventional technology, the user needs to perform at least two operations to watch a program. However, in the solutions of the embodiments, the user needs to perform only one operation, and this greatly simplifies user operations, and improves an application start speed and convenience compared with the conventional technology.

In an example, the terminal device includes a scenario recognition subsystem 501, an operation reporting subsystem 502, and an instruction conversion subsystem 503.

The scenario recognition subsystem 501 identifies a current use scenario of the user in real time. Specifically, the use scenario identified based on a recognition feature is used as a parameter (which is denoted as a scenario parameter para1), and is provided for the instruction subsystem 503 for use. The recognition feature may include but is not limited to some or all of the following identification features.

A recognition feature 1 is current time such as the clock time and the day of the week.

A recognition feature 2 is a current geographic location of the user. For example, the current location of the user is in a subway station. The current location is used for scenario recognition that is closely related to the geographic location of the user.

A recognition feature 3 is a user usage habit (including but not limited to user usage habit data calculated by an intelligent assistant), for example, approximate on-duty and off-duty time points of the user, and is used for recognition of some user habits at a specific time point. For example, the user is in a city library at 10:00 every Saturday.

A recognition feature 4 is schedule time and alarm time provided by a calendar or an alarm clock, for example, a football match day, and is used for recognition of something that needs to be done in a schedule and at a specific time point.

A recognition feature 5 is current weather conditions.

The operation reporting subsystem 502 reports a start location of a current swipe gesture of the user and the swipe gesture. Reported feature 1: coordinates of the start location of the swipe gesture. Reported feature 2: a swiping track (a swiping route on the touchscreen) of the swipe gesture.

With reference to a report result from the operation reporting subsystem 502, the instruction conversion subsystem 503 converts the scenario parameter para1 obtained by the scenario recognition subsystem 501 into a function/interface start instruction. Conversion feature 1: When the start location of the current swipe gesture is in a display area of an icon of a target application, use the started target application as a parameter para2. For example, if the start location of the current swipe gesture is in a display area of an icon of Alipay, the target application is determined as Alipay. Conversion feature 2: Obtain a specific key value based on a swiping track of the swipe gesture, and use the key value as a parameter para2, for example, obtain a key value corresponding to the swiping track of the current swipe gesture, and use the key value as the parameter para2. Conversion feature 3: Generate a start instruction based on the scenario parameter para1, the target application parameter para2, and the key value parameter para3 if all the three parameters meet a preset condition, and send the start instruction to the terminal device, to enable a function of the target application or display a function interface of the target application. The terminal device directly enables the function/displays the function interface according to the start instruction.

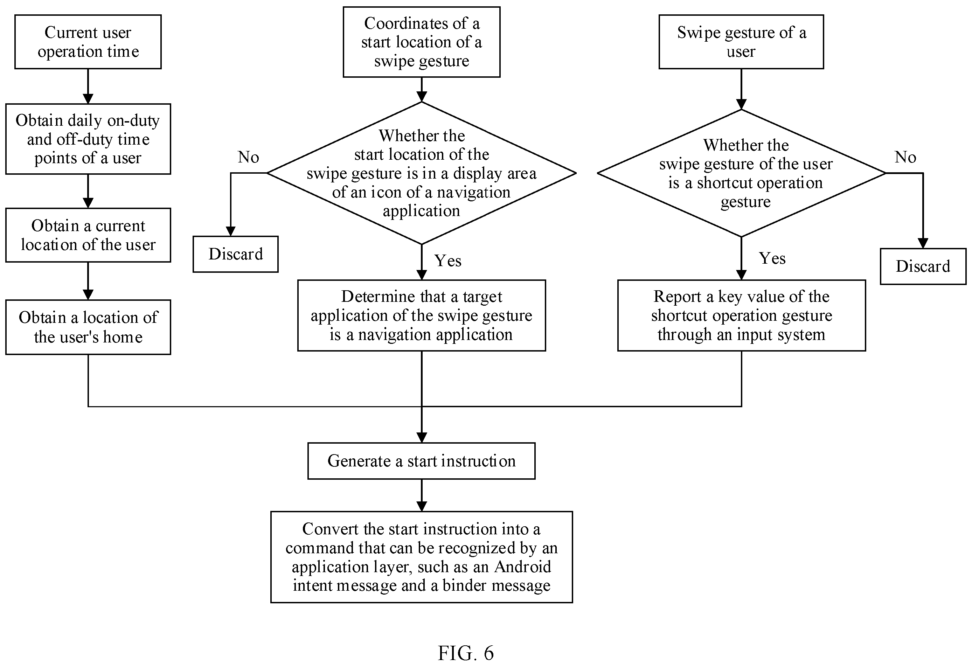

In a specific example, description is provided by using an example in which the user is off duty at 21:00 on Monday and performs navigation from the company to the home. As shown in FIG. 6, the operation reporting subsystem 502 of the terminal device detects and obtains a swipe gesture of the user in real time, and determines whether the swipe gesture of the user is a shortcut operation gesture. If the swipe gesture of the user is not a shortcut operation gesture, the obtained swipe gesture of the user is discarded. If the swipe gesture of the user is a shortcut operation gesture, the operation reporting subsystem 502 determines whether a start location of the swipe gesture is in a display area of an icon of Amap, and discards the swipe gesture if the start location of the swipe gesture is not in the display area of the icon of Amap. If the start location of the swipe gesture is in the display area of the icon of Amap, the operation reporting subsystem 502 determines that a target application of the swipe gesture is Amap, generates a key value of the shortcut operation gesture, reports information that the target application of the swipe gesture is Amap to the instruction conversion subsystem 503, and reports the key value of the shortcut operation gesture to which the swipe gesture belongs to the instruction conversion subsystem 503 through an input system.

In this case, the scenario recognition subsystem 501 obtains current time (that is, 21:00 on Monday) and a preset time period. The preset time period may be obtained by collecting statistics on daily on-duty and off-duty time points of the user in one week by using the intelligent assistant. If the current time is within the preset time period, a current location of the user and a location of the user's home (namely, a destination) are obtained, where the location of the user's home is obtained by collecting statistics on locations of the user in most nights in one week by using the intelligent assistant. The current location of the user is obtained by using a locating system such as a GPS of the terminal device. The scenario recognition subsystem 501 generates the scenario parameter para1 based on the location of the user's home, the current location of the user, the current time, and the preset time period, and reports the scenario parameter para1 to the instruction conversion subsystem 503.

The instruction conversion subsystem uses, as the target application parameter para2, Amap that is reported by the operation subsystem and for which the swipe gesture is directed, and uses the key value of the shortcut operation gesture reported by the operation subsystem as the key value parameter para3. The instruction conversion subsystem determines whether the scenario parameter para1, the target application parameter para2, and the key value parameter para3 meet the condition, and when the condition is met, the instruction conversion subsystem 503 generates a start instruction to start a navigation function of Amap. The instruction conversion subsystem 503 converts the start instruction into a command that can be recognized by an application layer, for example, an Android intent message, a binder message, and the like. The application layer runs, according to the identifiable command, an activity corresponding to a navigation interface, and finally displays the navigation interface on the terminal device, where a roadmap from the current location of the user to the location of the user's home is displayed in the navigation interface.

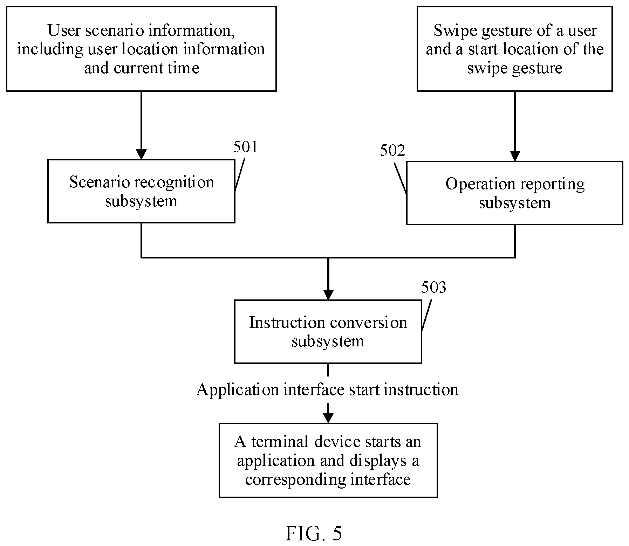

It should be noted herein that, in this embodiment, how the terminal implements navigation based on the swipe gesture of the user is described in detail with reference to the structure shown in FIG. 5 and a navigation scenario. For a specific implementation process in another scenario, refer to related descriptions in this embodiment.

In conclusion, the foregoing embodiments are merely intended for describing the technical solutions of this application, but not for limiting this application. Although this application is described in detail with reference to the foregoing embodiments, a person of ordinary skill in the art should understand that modifications to the technical solutions described in the foregoing embodiments or equivalent replacements to some technical features thereof may still be made.

## Claims

1. An application quick start method, comprising:
detecting a swipe gesture of a user in real time, and obtaining user scenario information if the swipe gesture of the user is a shortcut operation gesture, and a start location of the swipe gesture is in a display area of an icon of a target application, wherein the user scenario information comprises a current location of the user; and
starting the target application, and displaying a payment interface of the target application if the current location of the user is a preset location, wherein a payment barcode, a payment QR code, or a payment digital code is displayed in the payment interface.

2. The method according to claim 1, wherein the user scenario information further comprises current time, and the starting the target application, and displaying a payment interface of the target application if the current location of the user is a preset location comprises:
if the current location of the user is the preset location and the current time is within a preset time period, starting the target application, and displaying the payment interface of the target application.

3. The method according to claim 1 or 2, wherein the preset location comprises a bus station, a subway station, or a ferry terminal.

4. The method according to claim 2 or 3, wherein the preset time period is determined based on a usage habit parameter of the user, and the usage habit parameter comprises on-duty and off-duty time points of the user or a time point at which the user daily uses a ride payment function of the target software.

5. An electronic device, comprising a touchscreen, a memory, one or more processors, a plurality of applications, and one or more programs, wherein the one or more programs are stored in the memory, and when the one or more processors execute the one or more programs, the electronic device is enabled to implement the method according to any one of claims 1 to 4.

6. A computer storage medium, comprising computer instructions, wherein when the computer instructions are run on an electronic device, the electronic device is enabled to perform the method according to any one of claims 1 to 4.

7. A computer program product, wherein when the computer program product runs on a computer, the computer is enabled to perform the method according to any one of claims 1 to 4.

## Patentansprüche

1. Verfahren zum schnellen Start von Anwendungen, umfassend:
Detektieren einer Wischgeste eines Benutzers in Echtzeit und Erlangen von Benutzerszenarioinformationen, wenn die Wischgeste des Benutzers eine Geste für einen Schnellzugriffsvorgang ist und ein Startpunkt der Wischgeste in einem Anzeigebereich eines Symbols einer Zielanwendung liegt, wobei die Benutzerszenarioinformationen einen aktuellen Standort des Benutzers umfassen; und
Starten der Zielanwendung und Anzeigen einer Zahlungsschnittstelle der Zielanwendung, wenn der aktuelle Standort des Benutzers ein voreingestellter Standort ist, wobei in der Zahlungsschnittstelle ein Zahlungsbarcode, ein Zahlungs-QR-Code oder ein digitaler Zahlungscode angezeigt wird.

2. Verfahren nach Anspruch 1, wobei die Benutzerszenarioinformationen ferner eine aktuelle Zeit umfassen und das Starten der Zielanwendung und das Anzeigen einer Zahlungsschnittstelle der Zielanwendung, wenn der aktuelle Standort des Benutzers ein voreingestellter Standort ist, Folgendes umfassen:
wenn der aktuelle Standort des Benutzers ein voreingestellter Standort ist und die aktuelle Zeit innerhalb eines voreingestellten Zeitraums liegt, Starten der Zielanwendung und Anzeigen der Zahlungsschnittstelle der Zielanwendung.

3. Verfahren nach Anspruch 1 oder 2, wobei der voreingestellte Standort eine Bushaltestelle, eine U-Bahn-Station oder einen Fährterminal umfasst.

4. Verfahren nach Anspruch 2 oder 3, wobei der voreingestellte Zeitraum basierend auf einem Nutzungsgewohnheitsparameter des Benutzers bestimmt wird und der Nutzungsgewohnheitsparameter Arbeits- und Freizeitzeitpunkte des Benutzers oder einen Zeitpunkt umfasst, zu dem der Benutzer täglich eine Fahrtenzahlungsfunktion der Zielsoftware verwendet.

5. Elektronische Vorrichtung, umfassend einen Touchscreen, einen Speicher, einen oder mehrere Prozessoren, eine Vielzahl von Anwendungen und eines oder mehrere Programme, wobei das eine oder die mehreren Programme in dem Speicher gespeichert sind und, wenn der eine oder die mehreren Prozessoren das eine oder die mehreren Programme ausführen, die elektronische Vorrichtung in die Lage versetzt wird, das Verfahren nach einem der Ansprüche 1 bis 4 zu implementieren.

6. Computerspeichermedium, umfassend Computeranweisungen, wobei, wenn die Computeranweisungen auf einer elektronischen Vorrichtung ausgeführt werden, die elektronische Vorrichtung in die Lage versetzt wird, das Verfahren nach einem der Ansprüche 1 bis 4 durchzuführen.

7. Computerprogrammprodukt, wobei, wenn das Computerprogrammprodukt auf einem Computer läuft, der Computer in die Lage versetzt wird, das Verfahren nach einem der Ansprüche 1 bis 4 durchzuführen.

## Revendications

1. Procédé de démarrage d'application rapide, comprenant :
la détection en temps réel d'un geste de balayage d'un utilisateur et l'obtention d'informations sur le scénario utilisateur si le geste de balayage de l'utilisateur est un geste de fonctionnement raccourci, et un point de départ du geste de balayage est dans une zone d'affichage d'une icône d'une application cible, dans lequel les informations de scénario utilisateur comprennent une position actuelle de l'utilisateur ; et
le lancement de l'application cible, et l'affichage d'une interface de paiement de l'application cible si l'emplacement actuel de l'utilisateur correspond à un emplacement prédéfini, dans lequel un code-barres de paiement, un QR code de paiement ou un code numérique de paiement est affiché dans l'interface de paiement.

2. Procédé selon la revendication 1, dans lequel les informations sur le scénario utilisateur comprennent en outre l'heure actuelle, le lancement de l'application cible et l'affichage d'une interface de paiement de l'application cible si la position actuelle de l'utilisateur correspond à une position prédéfinie, comprend :
si la position actuelle de l'utilisateur correspond à la position prédéfinie et que l'heure actuelle est dans une période prédéfinie, le lancement de l'application cible, et l'affichage de l'interface de paiement de l'application cible.

3. Procédé selon la revendication 1 ou 2, dans lequel la position prédéfinie comprend une gare routière, une station de métro ou un terminal de ferry.

4. Procédé selon la revendication 2 ou 3, dans lequel la période prédéfinie est déterminée sur la base d'un paramètre d'habitude d'utilisation de l'utilisateur, et le paramètre d'habitude d'utilisation comprend des points de temps de travail et de repos de l'utilisateur ou un point de temps auquel l'utilisateur utilise quotidiennement une fonction de paiement de course du logiciel cible.

5. Dispositif électronique, comprenant un écran tactile, une mémoire, un ou plusieurs processeurs, une pluralité d'applications, et un ou plusieurs programmes, dans lequel les un ou plusieurs programmes sont stockés dans la mémoire, et lorsque les un ou plusieurs processeurs exécutent les un ou plusieurs programmes, le dispositif électronique est activé pour mettre en œuvre le procédé selon l'une quelconque des revendications 1 à 4.

6. Support de stockage informatique, comprenant des instructions informatiques, dans lequel, lorsque les instructions informatiques sont exécutées sur un dispositif électronique, le dispositif électronique est activé pour réaliser le procédé selon l'une quelconque des revendications 1 à 4.

7. Produit de programme informatique, dans lequel lorsque le produit de programme informatique est exécuté sur un ordinateur, l'ordinateur est activé pour réaliser le procédé selon l'une quelconque des revendications 1 à 4.
